# EUROPÄISCHE PATENTANMELDUNG

(11) **EP 0 789 999 A2**
(43) Veröffentlichungstag der Anmeldung: **20.08.1997**
(21) Anmeldenummer: 97200064.0
(22) Anmeldetag: 10.01.1997
(51) Int. Cl.: A01N 25/30, A01N 47/22, A01N 43/707, A01N 43/12

(54) **Herbizide Ölsuspensionskonzentrate**

(30) Priorität: 16.02.1996 DE 19605786
(71) Anmelder: Hoechst Schering AgrEvo GmbH, 13509 Berlin (DE)
(72) Erfinder: Frisch, Gerhard, Dr., 61273 Wehrheim (DE); Süssmann, Rainer, Dr., 38304 Wolfenbüttel (DE)

(57) **Zusammenfassung**

Die Erfindung betrifft ölbasierte Suspensionskonzentrate von Pflanzenschutzmitteln, die einen Wirkstoff, eine Tensidkombination aus einem Alkyl- und/oder Alkylarylethoxylat, das gegebenenfalls phosphatiert und neutralisiert ist, und einem Alkyl- und/oder Alkylarylsulfonat, sowie ein hydrophobiertes Alumoschichtsilicat enthalten.

Bevorzugte Wirkstoffe sind Herbizide, die zur Kontrolle oder Verbindung unerwünschten Pflanzenwuchses in Rübenkulturen dienen.

Die Konzentrate werden nach Verdünnung auf eine anwendungsfertige Konzentration auf die Pflanzen, Substrate oder die Anbauflächen appliziert.

## Beschreibung

Die vorliegende Erfindung betrifft Ölsuspensionskonzentrate, die Einen Wirkstoff, eine Tensidkombination aus Alkyl- und/oder Alkylarylethoxylat und Alkyl- und/oder Alkylarylsulfonat und ein hydrophobiertes Alumoschichtsilikat enthalten.

Pflanzenschutzmittel lassen sich bekanntlich in verschiedenen Formen formulieren. Als Beispiel sind zu nennen: Wasserdispergierbare Pulver (WP), emulgierbare Konzentrate (EC) und Suspensionskonzentrate (SC).

Bei den Suspensionskonzentraten (SC) kann man zwei große Gruppen unterscheiden, nämlich wasserbasierte und ölbasierte SCs. Wäßrige Dispersionen wie auch ölbasierte werden in der Literatur beschrieben und sind beispielsweise aus EP-A-0022925, US-A-5226945, EP-A-0110174, EP-A-0243872 und EP-A-0554015 bekannt. Die Mehrzahl der im Handel erhältlichen Suspensionskonzentrate sind auf Basis von Wasser und werden beispielsweise durch Naßvermahlung mittels Perlmühlen hergestellt.

Ölbasierte Suspensionskonzentrate, die voll im Wasser aufgehen müssen, wenn sie zu Applikationszwecken mit Wasser verdünnt werden, gibt man dann den Vorzug gegenüber wasserbasierten SCs, wenn man dadurch deutliche Wirkungsverbesserung bei beispielsweise gleichen Aufwandmengen an Wirkstoff pro ha erzielen kann. Auch verbesserte Lagerstabilität (sowohl chemische wie auch physikalische) und vereinfachte Herstellung kann den Ausschlag zugunsten von ölbasierten SCs geben.

Es wurden Ölsuspensionskonzentrate von Pflanzenschutzmitteln gefunden, die diesen Kriterien Rechnung tragen.

Die Erfindung betrifft daher Suspensionskonzentrate auf Ölbasis, welche
a) mindestens einen Wirkstoff ausgewählt aus der Gruppe Insektizide, Lockstoffe, Sterilantien, Akarizide, Nematizide, Fungizide, wachstumsregulierenden Stoffe, Herbizide und Safener,
b) mindestens ein Tensid ausgewählt aus der Gruppe der Alkylethoxylate und Alkylarylethoxylate, welche gegebenenfalls phosphatiert und gegebenenfalls mit einer Base neutralisiert sind,
c) mindestens ein Tensid ausgewählt aus der Gruppe der Alkylsulfonate und Alkylarylsulfonate und
d) als Verdicker ein hydrophobiertes Alumoschichtsilicat aus der Reihe der Bentonite enthalten.

Diese Suspensionskonzentrate enthalten vorzugsweise 1-35 Gew.-%, insbesondere 2-25 Gew.-% Wirkstoff oder Wirkstoffgemisch; vorzugsweise 20-95 Gew-.%, insbesondere 40-85 Gew.-% Öl; vorzugsweise 1-40 Gew.-%, insbesondere 2-30 Gew.-% eines wie oben unter b) definierten Tensids oder Tensidgemisches; Vorzugsweise 0,1-10 Gew.-%, insbesondere 0,3-6 Gew.-% eines wie oben unter c) definierten Tensids oder Tensidgemisches und vorzugsweise 0,1-10 Gew.-%, insbesondere 0,5-3,5 Gew.-% eines wie oben unter d) definierten Verdickers.

Es sind solche Wirkstoffe geeignet, die einen Schmelzpunkt von über 50°C aufweisen. Ihre Löslichkeit in Öl soll in der Regel < 5000 ppm sein; bevorzugt ist < 1000 ppm, insbesondere < 100 ppm.

Als Pflanzenschutzmittel kommen vorzugsweise Herbizide in Frage, insbesondere solche, die zur Kontrolle oder Verhinderung unerwünschten Pflanzenwuches in Rübenkulturen dienen und solche, die den Photosynthese-Elektronentransport inhibieren. Besonders bevorzugt sind Biscarbamate wie Phenmedipham und Desmedipham, Benzofurane wie Ethofumesat, Sulfonylharnstoffe wie Triflusulfuron, Triazinone wie Metamitron, Pyridazinone wie Chloridazon und Pyridincarbonsäuren wie Clopyralid. Diese Wirkstoffe sind beispielsweise beschrieben in "The Pesticide Manual", BCPC, 10. Auflage und in GB-A-1271559, GB-A-1127050 und GB-A-1368416.

Von diesen Herbiziden waren bisher vorzugsweise ECs und WPs - neuerdings auch WGs - bekannt (DD-A-209097, DD-A-214519). Erste Versuche, diese Wirkstoffe in Form von Suspensionskonzentraten zu formulieren, werden unter anderem in WO-A-92/09195, WO-A-92/09197, EP-A-0641516 und EP-A-062071 beschrieben. Hierbei handelt es sich um Suspensionskonzentrate von einem oder mehreren der genannten Wirkstoffe, die in der Regel Wasser als Trägerphase haben, in die jedoch auch Öle emulgiert sein können.

Erfindungsgemäß wird als Trägermedium nur Öl eingesetzt, ein besonderer Zusatz von Wasser ist nicht erforderlich und sogar gänzlich unerwünscht, nur so wird die notwendige Stabilität sowohl physikalischer wie auch chemischer Art erhalten. Als Öle kommen vorzugsweise nichtaromatische organische Verbindungen, die flüssig sind und einen Siedepunkt größer als 62°C vorzugsweise größer als 100°C bei Normaldruck haben, in Frage. Als Beispiele sind zu nennen: paraffinische Öle wie BP n-Paraffin (BP Chemicals), fette Öle pflanzlichen oder tierischen Ursprungs wie Rapsöl, Sonnenblumenöl, Baumwollsaatöl, Leinöl, Sojaöl, Kokosöl, Palmöl, Distelöl und Rhizinusöl, ein- oder mehrwertige Alkohole wie Decanol, Stearin-, Lauryl-, Palmitin-, Tallowalkohol, Glycole und Glycerin und Polyglycole. Besonders bevorzugt werden Ester organischer Carbonsäuren mit ein- oder mehrwertigen Alkoholen. Als Carbonsäuren kommen unter anderen solche mit 10-36 C-Atomen, für den Alkoholteil solche mit 1 bis 26 C-Atomen in Frage. Besonders geeignet sind Rapssäuremethylester- und -ethylester, Laurinsäureisobutylester, Stearinsäurebutylester, Palmitinsäuremethyl- und 2-(ethyl)hexylester. Bei der entsprechenden Auswahl der Öle kann ein Teil der/des verwendeten Wirkstoffe(s) auch in gelöster Form vorliegen neben der festdispergierten Phase. Dies ist aber nicht essentiell.

Der Vorteil dieser rein auf Öl basierten SCs liegt darin, daß die in Frage kommenden Pflanzenschutzmittelwirkstoffe, vorzugsweise Phenmedipham, Desmediphan, Ethofumesat und/oder Metamitron in diesem Trägermedium auch bei Verdünnung mit Wasser zu Applikationszwecken deutlich besser biologisch wirksam sind als ihre rein auf Wasserbasis formulierten Analoga. Sie sind den bisher bekannten EC-Formulierungen biologisch mindestens ebenbürtig und von den toxikologischen Eigenschaften deutlich besser.

Bei den erfindungsgemäßen Ölsuspensionskonzentraten handelt es sich um äußerst stabile SC-Formulierungen. Sie weisen zudem kein Kristallwachstum bei Lagerung auf. Um diese stabilen, anwendungstechnisch einwandfreien Öl-SCs zu erstellen, werden nur Öl, Wirkstoff(e), die erfindungsgemäße Tensidmischung und vor allem der spezielle hydophobierte Verdicker benötigt. Es wird keinerlei Wasserzusatz benötigt. Neben diesen essentiellen Bestandteilen können, müssen aber notwendigerweise nicht, weitere Hilfsmittel wie Farbstoffe, Konservierungsmittel, Düngemittel, Entschäumer enthalten sein.

Solche Formulierungshilfsmittel sind z.B. Entschäumer auf der Basis von Tributylphosphat oder auf Silicon-Basis wie Dialkylpolysiloxan und übliche Konservierungsmittel wie Benzoesäure, Sorbitansäure, Formaldehyd oder Spuren fungizider Wirkstoffe.

Als erfindungsgemäße Tensidmischung kommt eine Kombination von Alkyl- und/oder Alkylarylethoxylaten mit 6-36 C-Atomen und 2 - 60 Ethylenoxideinheiten (EO) und Alkyl- und/oder Alkylarylsulfonaten mit 6-36 C-Atomen in Frage. Unter erstere fallen beispielsweise Tenside solche wie die aus der ®Arkopal Reihe (Hoechst AG), bei denen es sich um Nonylphenole mit 3 - 50 EO handelt, oder aus den ®Genapol Reihen (Hoechst AG), welches Fettalkohole wie Cocosfettalkohlol, Oleylalkohol, Stearylalkohol, Talgfettalkohol etc. oder Isotridecylalkohol mit 2 - 40 EO sind. Diese Ethoxylate können zudem noch phosphatisiert und gegebenfalls mit Basen wie Alkali oder Aminen neutralisiert sein, wie ®Emcol 136 (Witco Chem), welches ein mit Alkali neutralisiertes Alkylphenolpolyglykoletherphosphat ist. Als Alkylarylsulfonate kommen Tenside wie das Ca-Dodecylbenzolsulfonat (Hoechst AG) in Frage.

Bei dem speziellen Verdicker der erfindungsgemäßen Öl-SCs, der essentiell für die physikalische Stabilität der Formulierungen ist, handelt es sich um ein hydrophobiertes Alumoschichtsilikat aus der Reihe der Bentonite, z. B. ®Bentone SD1 und 38, vorzugsweise jedoch um ®Bentone 27 der Firma Rheox Inc. Dieser Bentonit ist in der Lage, das Sedimentationsverhalten der fest dispergierten Phase so zu beeinflussen, daß weder Zementierung noch starke Sedimentation während einer Lagerzeit von 3 Monaten bei -5°, 0, 10 ,25 und 50°C auftreten. Dies ist notwendig, um eine gute Anwendung in der Praxis zu garantieren. Nimmt man statt diesen andere bekannte hydrophobierte Alumoschichtsilikate wie z. B. ®Attagel (Firma Engelhard), so lassen sich diese Öldispersionen zwar gut vermahlen, aber sie neigen schon nach kürzester Zeit zu starker Sedimentation einschließlich Phasentrennung und Zementieren nach 3 Monaten bei 25°C bzw. 50°C. Sie sind damit für eine normale Anwendung ungeeignet. In den nachfolgenden Tabellen wurde die erfindungsgemäßen Formulierungen anhand von Beispielen und Vergleichsbeispielen erläutert. Tabelle 1 zeigt die erfindungsgemäßen Beispiele, in Tabelle 2 finden sich Beispiele, wo ®Bentone gegen Attagel ausgetauscht wurde, und Tabelle 3 enthält biologische Beispiele.

Die erfindungsgemäßen Formulierungen lassen sich in bekannter Weise herstellen, indem man z.B. eine Vormischung aus den genannten Bestandteilen herstellt, diese vorzerkleinert und dann einer Feinvermahlung in Perlmühlen unterzieht. Diese Ölsuspensionskonzentrate können sowohl als solche als auch - gänzlich unproblematisch mit Wasser gemischt - in bekannter Art und Weise auf Pflanzen, Substrate oder Anbauflächen appliziert werden.

Die Formuliorungen der folgenden Tabelle 1 weisen in den Lagertests (3 Monate bei -5, 0, 10, 25 bzw. 50°C eine hohe Stabilität auf. Es wird kein Kristallwachstum beobachtet.

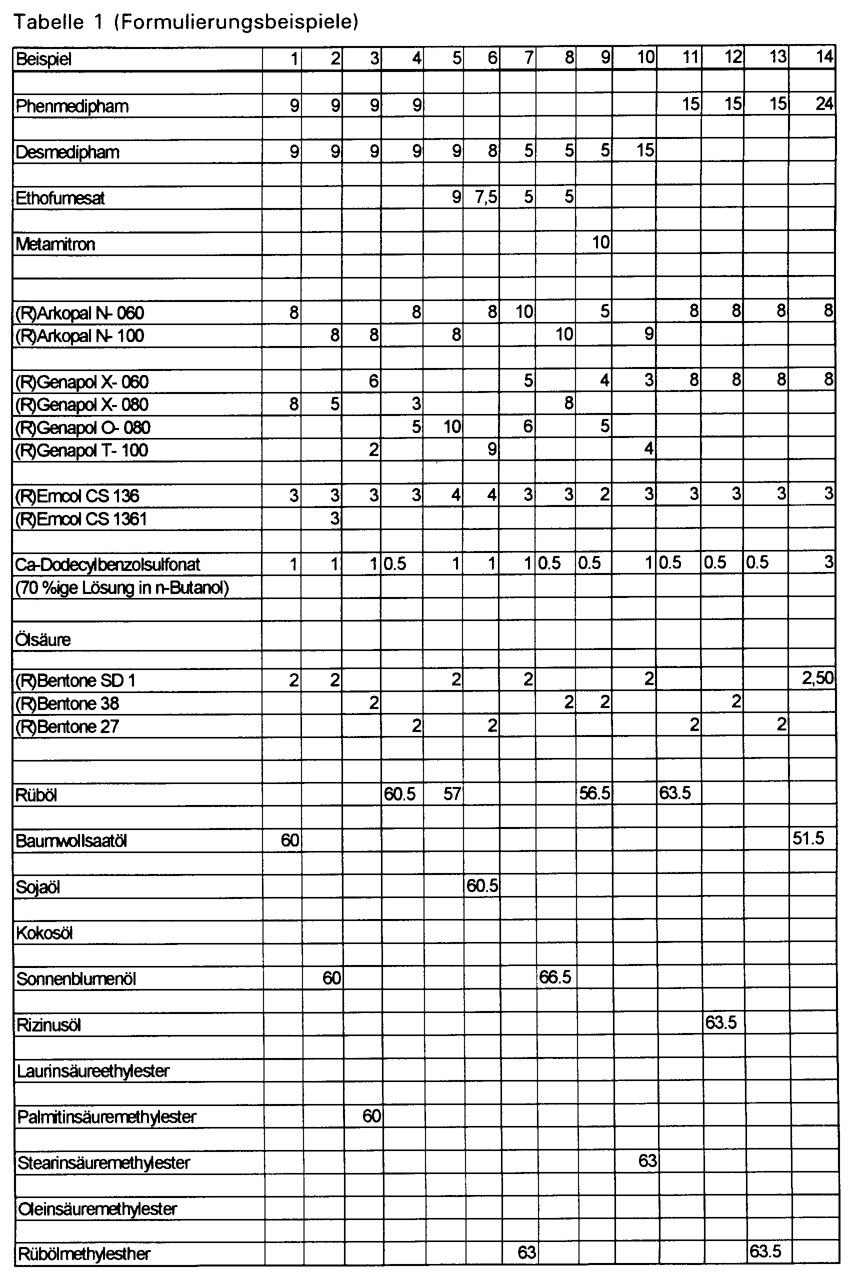

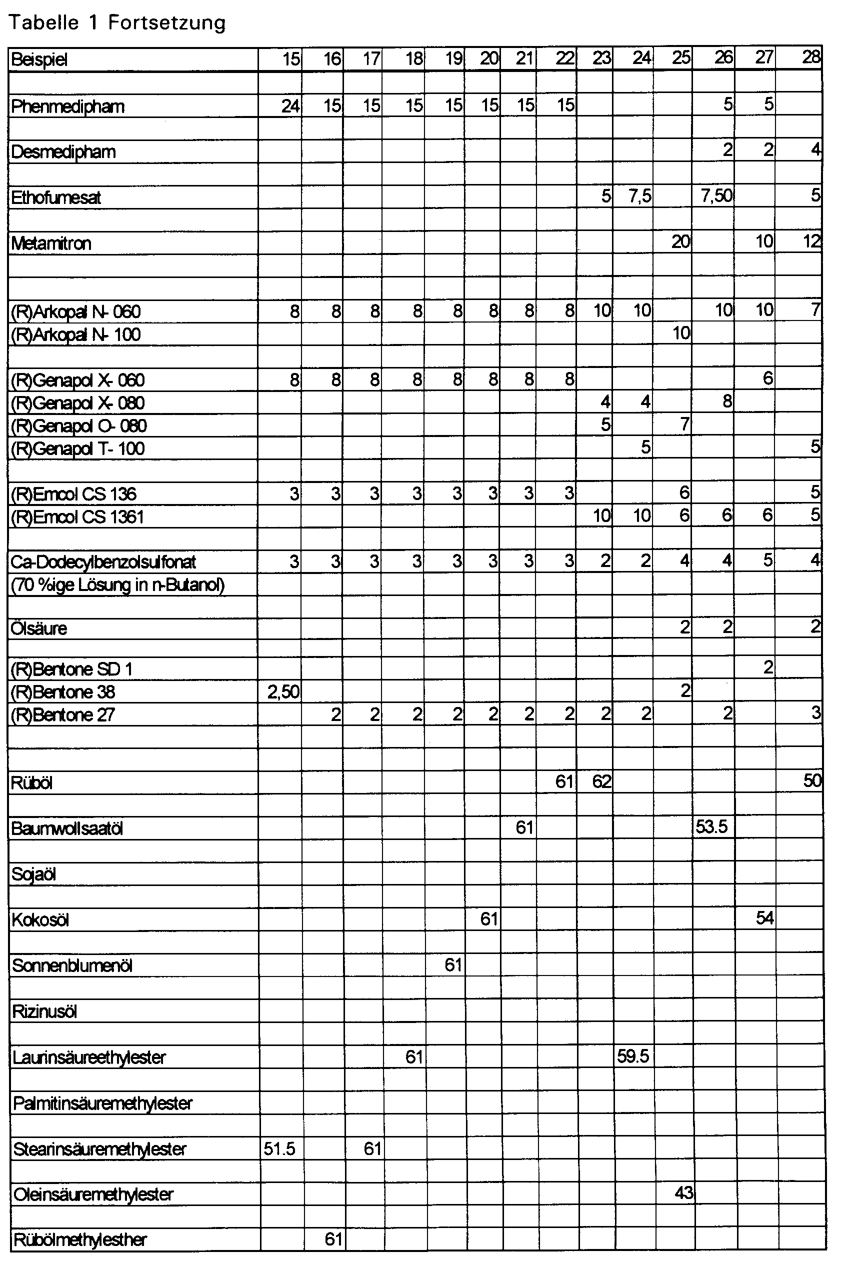

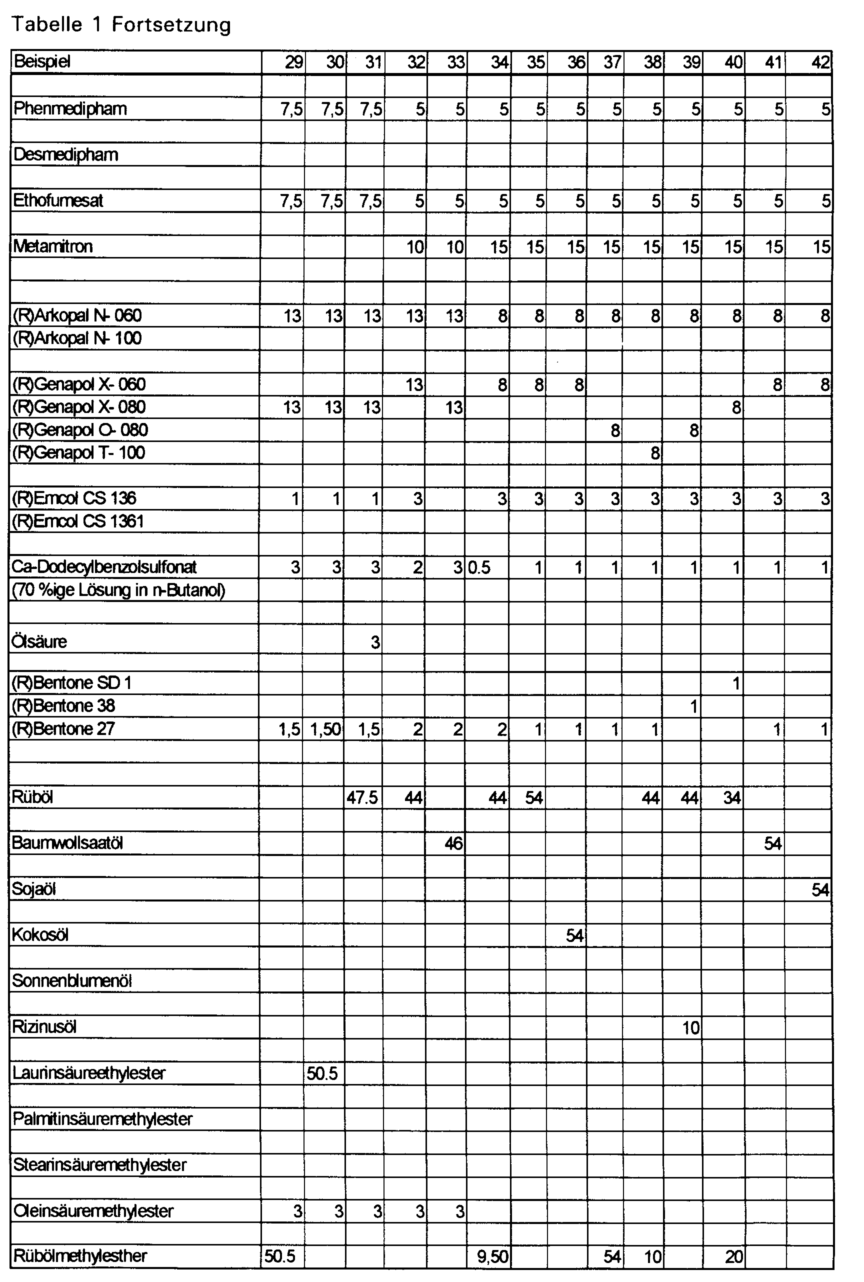

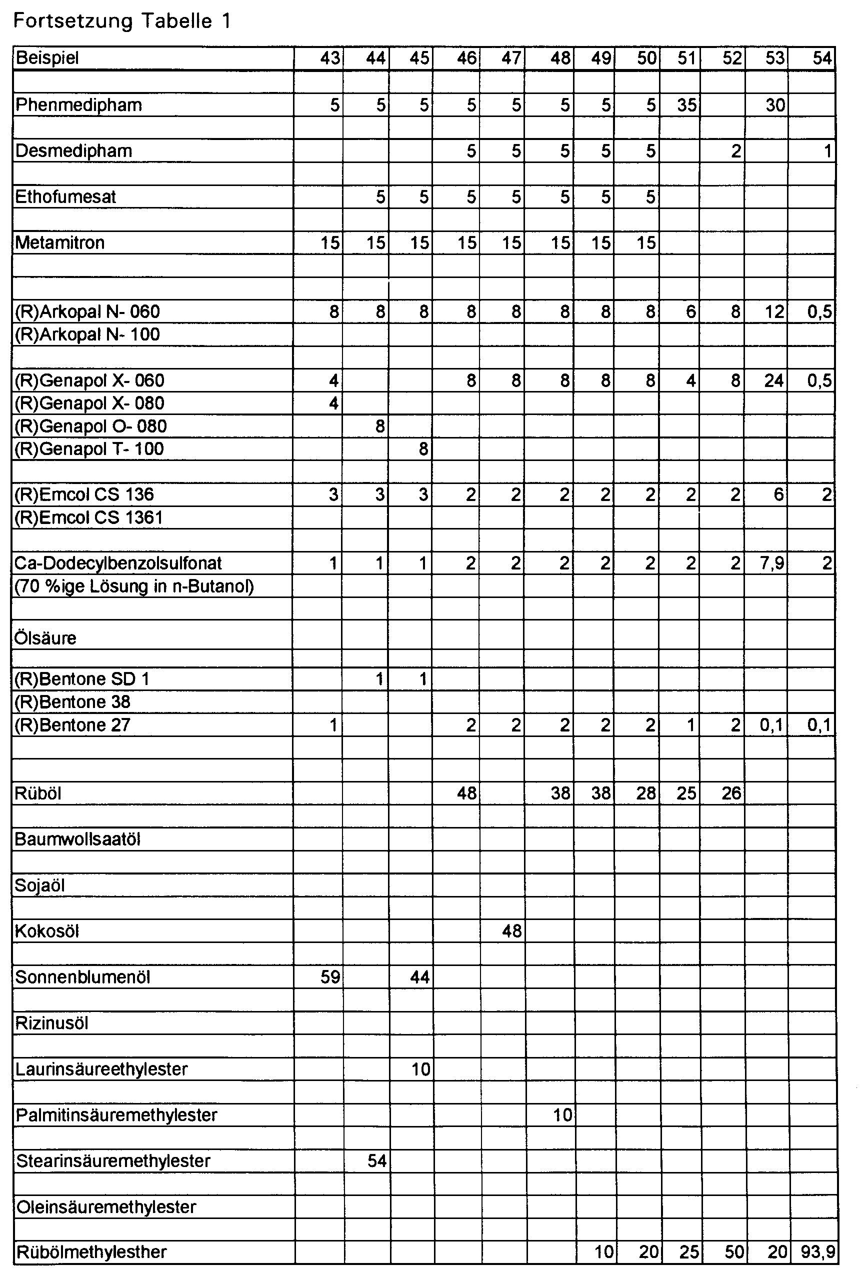

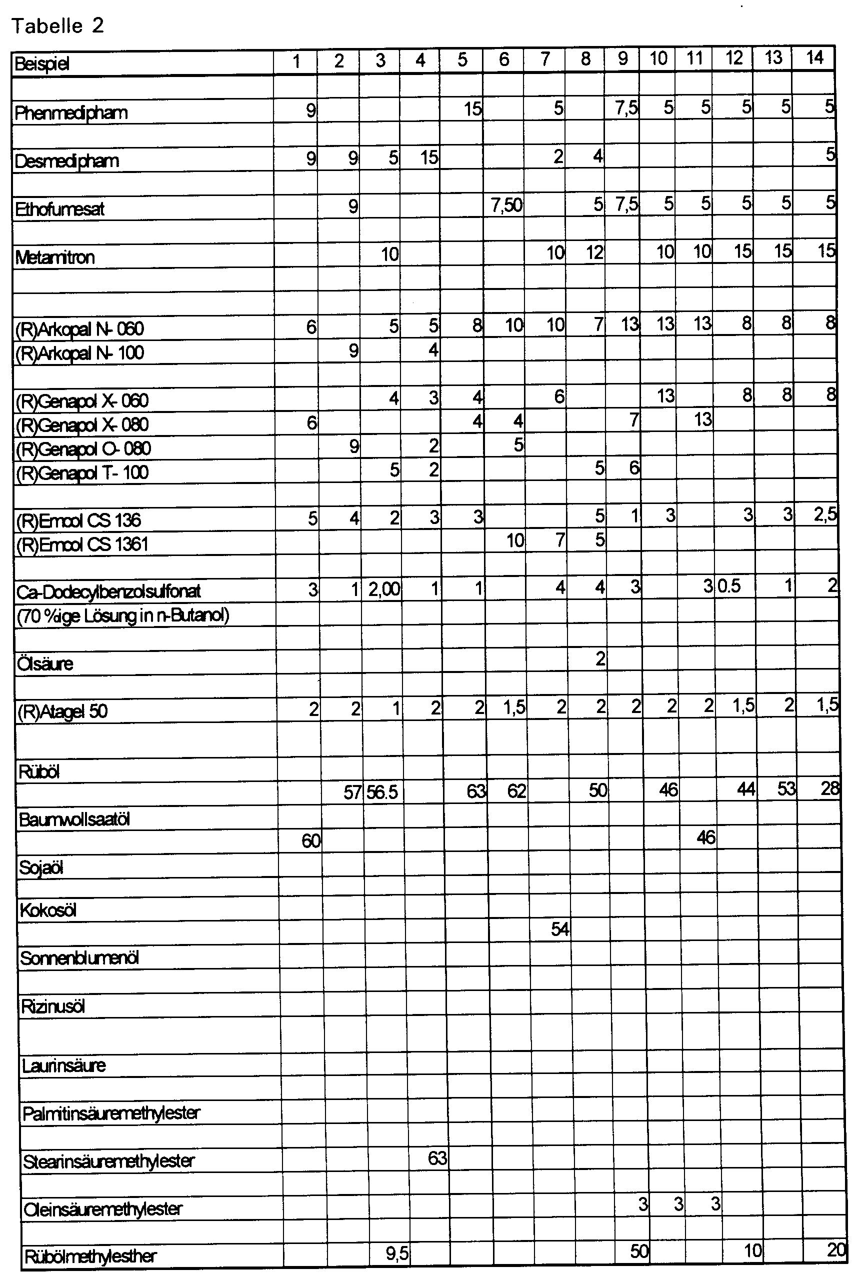

Die Formulierungen von Tabelle 2 weisen in den Lagertests (3 Monate bei -5, 0, 10, 25 bzw. 50°C) eine unzureichende Stabilität auf. Sie neigen nach kurzer Zeit zu starker Sedimentation. Nach 3 Monaten bei 25 und 50°C beobachtet man Phasentrennung und Zementieren.

### Biologische Beispiele

### Formulierung 1 (Ölsuspensionskonzentrat gemäß Tabelle 1, Beispiel 34)

### Formulierung 2 (wasserdispergierbares Granulat, Vergleichsformulierung)

30 Gew.-% Metamitron
6 Gew.-% Ethofumesat
6 Gew-% Phenmedipham
5 Gew.-% ethoxyliertes Alkylphenol
8 Gew.-% Ligninsulfonat
10 Gew.-% Tridecylalkohol (6 EO)
10 Gew.-% synthetische Kieselsäure
25 Gew.-% Kaolin

### Formulierung 3 (Suspensionskonzentrat auf Wasserbasis; Vergleichsformulierung)

27 Gew.-% Metamitron
9 Gew.-% Ethofumesat
9 Gew.-% Phenmedipham
3 Gew.-% phosphatiertes Tristyrylphenolethoxylat
0,2 Gew.-% Silicon-Entschäumer
1 Gew.-% sulfatiertes Tristyrylphenolethoxylat
6 Gew.-% Glycol
Rest Wasser

**Tabelle 3**

| (Herbizide Wirkung) | | | |
|---|---|---|---|
| Schadpflanze | Formulierung 1 3 x 3 l/ha | Formulierung 2 3 x 2 kg/ha | Formulierung 3 3 x 1,5 l/ha |
| Aethusa cynapium | 97 % | 92 % | 88 % |
| Brassica napus | 96 % | 95 % | 93 % |
| Gallium aparine | 98 % | 97 % | 95 % |
| Lamium purpureum | 99,5 % | 99,5 % | 94 % |
| Matricaria chamomilla | 99,5 % | 99 % | 97 % |
| Polygonum aviculare | 99 % | 99 % | 98 % |
| Viola arvensis | 100 % | 99 % | 98,5 % |

Bei gleicher Aufwandmenge an Wirkstoffen pro ha zeigt das erfindungsgemäße Ölsuspensionskonzentrat verglichen mit einem wasserdispergierbaren Granulat und einem wasserbasierten Suspensionskonzentrat, eine deutliche bessere Wirkung.

## Patentansprüche

1. Suspensionskonzentrat auf Ölbasis, enthaltend
a) mindestens einen Wirkstoff ausgewählt aus der Gruppe der Insektizide, Lockstoffe, Sterilantien, Akarizide, Nematizide, Fungizide, wachstumsregulierenden Stoffe, Herbizide und Safener,
b) mindestens ein Tensid ausgewählt aus der Gruppe der Alkylethoxylate und Alkylarylethoxylate, welche gegebenenfalls phosphatiert und gegebenenfalls mit einer Base neutralisiert ist,
c) mindestens ein Tensid ausgewählt aus der Gruppe der Alkylsulfonate und Alkylarylsulfonate und
d) als Verdicker ein hydrophobiertes Alumoschichtsilicat aus der Reihe der Bentonite.

2. Suspensionskonzentrat gemäß Anspruch 1, welches
1-35 Gew.-% Wirkstoff oder Wirkstoffgemisch,
20-95 Gew.-% Öl,
1-40 Gew.-% eines im Anspruch 1 unter b)
definierten Tensids oder Tensidgemisches,
0,1 - 10 Gew.-% eines im Anspruch 1 unter c)
definierten Tensids oder Tensidgemisches und
0,1 - 10 Gew.-% eines im Anspruch 1 unter d)
definierten Verdickers enthält.

3. Suspensionskonzentrat gemäß Anspruch 1 oder 2, bei welchem der Wirkstoff oder das Wirkstoffgemisch aus der Gruppe der Herbizide ausgewählt wird.

4. Suspensionskonzentrat gemäß einem der Ansprüche 1 bis 3, bei welchem der Wirkstoff oder das Wirkstoffgemisch ausgewählt wird aus der Gruppe der Herbizide, die zur Kontrolle der Verhinderung unerwünschten Pflanzenwuches in Rübenkulturen dienen.

5. Suspensionskonzentrat gemäß einem der Ansprüche 1 bis 4, bei welchem der Wirkstoff oder das Wirkstoffgemisch ausgewählt wird aus der Gruppe der Biscarbamat-, Benzofuran-, Sulfonylharnstoff-, Triazinon-, Pyridazinon- und Pyridincarbonsäure-Herbizide.

6. Suspensionskonzentrat gemäß einem der Ansprüche 1 bis 5, welches ein Öl mit einem Siedepunkt von über 62°C bei Normaldruck enthält, das aus einer oder mehreren Komponenten besteht, die ausgewählt sind aus der Gruppe der paraffinischen Öle, der fetten Öle pflanzlichen und tierischen Ursprungs, der ein- oder mehrwertigen Alkohole, der Polyglycole und der Ester von Carbonsäuren mit ein- oder mehrwertigen Alkoholen.

7. Suspensionskonzentrat gemäß einem der Ansprüche 1 bis 6, enthaltend mindestens ein Tensid ausgewählt aus der Gruppe der (C₆-C₃₆)-Alkyl- und (C₆-C₃₆)-(Alkylaryl)-ethoxylate mit jeweils 2-60 Ethylenoxideinheiten, das gegebenfalls phosphatiert- und gegebenenfalls mit einer Base neutralisiert ist, und
mindestens ein Tensid ausgewählt aus der Gruppe der (C₆-C₃₆)-Alkyl- und (C₆-C₃₆)-(Alkylaryl)-sulfonate in Form ihre Alkali- oder Erdalkalisalze.

8. Verfahren zur Herstellung eines Suspensionskonzentrates gemäß einem der Ansprüche 1 bis 7, dadurch gekennzeichnet, daß man eine Vormischung der Komponenten herstellt, diese vorzerkleinert und anschließend feinvermahlt.

9. Verwendung eines Suspensionskonzentrates gemäß einem der Ansprüche 1 bis 7 im Pflanzenschutz, bei welcher man dieses gegebenenfalls mit Wasser auf eine anwendungsfertige Konzentration verdünnt und dann auf die Pflanzen, die Substrate oder die Anbauflächen appliziert.

10. Verfahren zur Bekämpfung oder Kontrolle unerwünschten Pflanzenwuchses, dadurch gekennzeichnet, daß man ein herbizides Suspensionskonzentrat gemäß einem der Ansprüche 1 bis 7 gegebenenfalls nach Verdünnung mit Wasser auf eine anwendungsfertige Konzentration auf die Pflanzen, die Substrate oder die Anbauflächen appliziert.
